# EUROPEAN PATENT SPECIFICATION

(11) **EP 3 374 544 B1**
(45) Date of publication and mention of the grant of the patent: **28.08.2019**
(21) Application number: 16791042.1
(22) Date of filing: 07.11.2016
(51) Int. Cl.: C25B 1/10, C25B 9/00, C25B 9/12, C25B 9/08

(54) **ELECTROCHEMICAL CELL**
ELEKTROCHEMISCHE ZELLE
CELLULE ÉLECTROCHIMIQUE

(30) Priority: 10.11.2015 EP 15193923
(43) Date of publication of application: 19.09.2018
(73) Proprietor: Nouryon Chemicals International B.V., 6824BM Arnhem (NL); Technische Universiteit Eindhoven (TU/E), 5612 AZ Eindhoven (NL)
(72) Inventor: VAN DER SCHAAF, John, NL-3332 CS Zwijndrecht (NL); GRANADOS MENDOZA, Paola, NL-5612 DK Eindhoven (NL); MOSHTARIKHAH, Shohreh, 5612 HB Eindhoven (NL); BINDRABAN, Dipnarain, NL-5045 PS Tilburg (NL); DE GROOT, Matheus Theodorus, NL-3581 RN Utrecht (NL)
(74) Representative: Akzo Nobel Chemicals IP Group
(86) International application number: PCT/EP2016/076801
(87) International publication number: WO 2017/080943

(56) References cited:
- EP-A1- 0 226 384
- EP-A1- 0 662 530
- DE-U1-202012 012 463
- L. LAO ET AL: "Process intensification: water electrolysis in a centrifugal acceleration field", JOURNAL OF APPLIED ELECTROCHEMISTRY., vol. 41, no. 6, 17 March 2011 (2011-03-17) , pages 645-656, XP055247033, NL ISSN: 0021-891X, DOI: 10.1007/s10800-011-0275-2

## Description

The invention relates to an electrochemical cell comprising a separator wall, such as a membrane or diaphragm, separating a cathode compartment from an anode compartment. Such electrochemical cells may be used for electrolysis by providing electric potential to facilitate redox reactions, or as fuel cells by generating electrical energy from chemical reactions.

To reduce energy consumption in electrolysis the voltage drop between the anode and the cathode should be kept low. To this end it has been proposed to use zero-gap cells. In such a configuration the anode and cathode are meshes at opposite sides of the membrane. Such a configuration is for example disclosed in the Handbook of Chlor-Alkali Technology, T.F. O'Brien (ed.), Springer, 2005, pp 1046 - 1047. However, it has been found that gas bubbles tend to stick between the membrane and the electrode meshes, which causes a significant increase of the cell potential. Moreover, zero-gap cells typically show an uneven current distribution, which can cause mass and heat transfer limitations, which in turn also leads to increased cell potential.

The problem of gas bubbles adhering to the electrode is addressed by the article by H. Cheng c.s., "Chlorine Evolution In A Centrifugal Field", Journal of Applied Electrochemistry, 32, p. 831 - 838 (2002), although this publication is not about zero-gap cells. This article discloses a reactor for the electrochemical production of chlorine and sodium hydroxide. Two electrochemical membrane cells are rotated to generate a centrifugal field. This results in efficient removal of gas bubbles from the electrodes. The disclosed configuration comprises two cells symmetrically coupled to a common rotational axis, which are rotated as a whole, about a rotational axis running parallel to the separating membranes of the two cells. Although this configuration improves gas bubble removal, it does not particularly enhance mass and heat transfer to and from the electrodes and the membrane.

WO 2007/061319 discloses a rotatable cell for producing hydrogen by electrolyzing water. Electrolysis is performed under high G conditions. As a result, gas bubbles produced by the electrolysis process were found to be small and easily separable from the electrolyte. The reactor has only one electrolyte feed stream, making it unsuitable for processes with differences in anolyte and catholyte compositions, such as chlor alkali electrolysis.

The abstract by P. Granados Mendoza c.s., "Process Intensification of Electrochemical Processes by Enhanced Mass Transfer Using the Rotor-Stator Spinning Disc Reactor", Proceedings of the AlChE Annual Meeting 2014, 16-21 November 2014, Atlanta, Georgia, teaches that mass transfer in an electrochemical cell can be intensified by using a rotor-stator spinning disc reactor. Such rotor-stator spinning disc reactors comprise one or more spinning discs in a stator housing and are similar to electrochemical pump cells as disclosed in "Electrochemical reactors" H. Vogt in Ullmann Encyclopedia of Industrial Chemistry, 2008, in particular Figure 22, having a bipolar electrode rotor disc between two stationary electrodes. Common with these concepts is that the electrolyte flows through the gap between the two electrodes, which makes it difficult to make use of an ion-exchange membrane.

The same publication also discloses electrochemical cells with a rotating cylinder electrode in a gap between two stationary electrodes (Figures 19). Both electrodes are separated from the cylinder by a diaphragm or membrane. Such a cell has a relatively high cell potential due to the potential drop over the solution separating the electrodes.

DE 20 2012 012463 describes an electrolytic device for the electrolysis of water. This device has a static electrode and a rotor electrode placed in a container. The rotor electrode is rotatably movable with respect to the static electrode. The static electrode has a tubular body and has circular segments extending radially into the interior of the container.

EP 0662530 describes an electrolysis device with one rotating monopolar electrode and one-fixed counterelectrode.

The issue with devices having both a static and rotary electrode is that this increases the ohmic resistance. As a result thereof, the current density is decreased, which is, of course, undesirable for an electric cel. This concept also suffers from the same drawback as mentioned above: the electrolyte flows through the gap between the static and rotory electrode, which makes it difficult to make use of an ion-exchange membrane.

A further rotary electrolyser cell is disclosed in the article by Lao c.s., "Process intensification: water electrolysis in a centrifugal acceleration field", Journal of Applied Electrochemistry, vol. 41, no. 6, 2011, p. 645-656.

It is an object of the invention to provide an electrochemical cell with improved heat and mass transfer and reduced cell potential.

The object of the invention is achieved with an electrochemical cell comprising:
- an anolyte space with an anode;
- a catholyte space with a cathode; and
- a separator disc, such as a membrane or diaphragm, separating the anolyte space from the catholyte space.
The anolyte space and/or the catholyte space comprise at least one wall which is rotatable about an axis of rotation crossing the separator disc, wherein the electrochemical cel comprises at least one stator in the anolyte space and/or the catholyte space. The rotatable wall can for example be the separator disc itself.

Since the rotational axis crosses the separator disc, a centrifugal electrolyte flow is generated over the separator disc enabling optimization of massflow over the separator disc in a system with separated anolyte and catholyte spaces.

The stator that is present either in the anolyte space and/or the catholyte space creates shear forces in the anolyte space and/or the catholyte space when rotating the rotatable wall.

In a specific embodiment, the electrochemical cell may comprise a disc in the anolyte space, the disc being spaced from the separator disc to define an anolyte gap comprising the anode. This anolyte gap is operatively connected to an anolyte inlet and an anolyte outlet. Additionally, or alternatively, the catholyte space may comprise such a disc, spaced from the cathode side of the separator disc to define a catholyte gap comprising the cathode, the catholyte gap being operatively connected to a catholyte inlet and a catholyte outlet. For instance, the catholyte and anolyte spaces may both comprise such discs in parallel, e.g., symmetrical, arrangement with the separator disc.

The two discs, or one of both discs, may for example form the stator. This way, a stator-rotor arrangement is obtained with substantially more mass transfer along the separator disc than could be achieved with a mere centrifugal field. The rotational movement not only generates a centrifugal force, but also shear forces resulting in thorough mixing of the electrolyte. Accumulation of gas bubbles at the electrodes and concentration polarization in the boundary layer are significantly reduced. Due to enhanced mass transfer to the electrodes and the separator disc, and due to enhanced heat dissipation by the separator disc, the cell can operate at high current densities at relatively low cell potentials. Better mixing in the boundary layers reduces the osmotic pressure difference between the anolyte and catholyte sides of the separator disc. This results in a lower cell potential and decreased stress in the separator disc at the interface between different layers of the separator disc. This results in a reduced risk of blisters. This risk of blisters is further reduced by the improved heat dissipation, which prevents boiling of the electrolyte in the separator disc and subsequent precipitation of salt. Moreover, since the cell according to the present disclosure enables operation at high current densities the required electrode area is less, so less reinforcements are needed to provide the necessary mechanical strength of the separator disc. Such reinforcements typically cause uneven current density distribution, which can potentially also lead to blister formation. Since blisters are the main cause of failure of separator discs or separator walls, the reduced risk of blisters significantly increases lifetime of the separator disc. Optionally, a membrane without reinforcements can be used.

In an alternative arrangement one or both discs may be rotatable while the separator disc forms a stator. E.g., the two discs may be rotatable relative to the separator disc with the same speeds or with different rotational speeds and/or rotational directions. The rotational axes of the two rotor discs may coincide or may be offset and/or at angles with one another.

In a specific possible embodiment, the anode is an anode mesh in contact with the anode side of the separator disc, and/or the cathode is a cathode mesh in contact with the cathode side of the separator disc. A zero-gap configuration is obtained if the cathode as well as the anode is configured this way. The stator-rotor set-up effectively prevents accumulation of gas bubbles that could lead to an increase in the cell potential with this zero-gap configuration.

Optionally, the cell may have a symmetrical lay-out with the two discs and the anolyte and catholyte gaps may be symmetrically shaped and arranged relative to a central separator disc. Other lay-outs may also be used, if so desired.

In a specific embodiment the separator disc connects to a housing encasing the first and/or second discs. For example, the first disc and/or the second disc is connected to a central hollow shaft at a side opposite to the side facing the separator disc, the hollow shaft defining a central electrolyte channel. The housing may comprise passages for the hollow shafts. These passages may for example define annular electrolyte channels bordered by the respective hollow shaft.

Optionally, the central electrolyte channel through the hollow shaft is an inlet channel connected to an electrolyte supply, while the annular electrolyte channel around the shaft is a discharge channel connecting to a discharge line.

Optionally, an oxygen depolarized cathode can be used. In such an embodiment a gas-liquid mixture of caustic and oxygen is supplied via the inlet of the catholyte space. In that case the liquid at the outlet would only comprise caustic and some non-reacted oxygen, since no hydrogen is formed.

Alternatively, the annular electrolyte channel around the hollow shaft can be used as an inlet channel connected to an electrolyte supply, while the central electrolyte channel through the shaft is a discharge channel connecting to a discharge line.

The cell according to the present invention is particularly suitable for the electrolysis of brine with high concentrations of sodium or potassium chloride at the anode side and high concentrations of sodium or potassium hydroxide at the cathode side and generating chlorine gas at the anode and hydrogen gas at the cathode. Since the separator disc separates the anolyte gap from the catholyte gap, the two electrolytes are effectively separated.

The electrochemical cell can also be used for electrolysis of water with high concentrations of alkali (KOH and/or NaOH) at both sides of the separator disc, generating oxygen at the anode and hydrogen at the cathode. In such a process the separator disc may be a diaphragm. The cell is also suitable for use with electrolysis of acidic water.

The electrochemical cell according to the invention could also be used for the production of chlorates or fluorines, electrowinning, electrorefining or electroplating. A particular example of a process for which the cell could be used is the synthesis of adiponitrile by electrolytic hydrodimerization of acrylonitrile. This reaction occurs at the cathode. At the anode side water reacts to form oxygen.

The electrochemical cell can also be used as a fuel cell. For instance, the cell can be fed at the anode side with a mixture of electrolyte and hydrogen at the anode side and with a mixture of oxygen and electrolyte at the cathode side.

The separator disc can be a diaphragm or a membrane, such as a heterogeneous or homogeneous ion-exchange membrane. Examples of suitable membranes include anion-exchange membranes, cathion exchange membranes. Materials used for diaphragms for water electrolysis include asbestos, porous PTFE, polyantimonic acid, nickel oxide and polypenyle sulfide. Electrodes for water electrolysis generally comprise activated nickel.

The separator disc may for example be circular, e.g., with a diameter of 0.05 - 0.5 m, but smaller or larger discs can also be used, if so desired.

Suitable rotational speeds for the rotatable wall or rotor of the cell are for instance speeds up to 5000 rpm, e.g. up to 2000 rpm, e.g. up to 800 rpm, e.g. at least 10 rpm or at least 200 rpm. Other speeds can also be used if so desired.

In case the cell is used for electrolysis of brine a membrane can be used comprising two layers. These layers may for example comprise a sulfonated perfluorinated polymer and a carboxylated perfluorinated polymer, respectively.

In case the cell is used for electrolysis of brine, the anodes may for example comprise a coating of RuO₂ and TiO₂ on a titanium substrate (typically known as dimensionally stable anodes). The cathode may for example be made of a nickel substrate with a special coating (typically known as an activated nickel cathode. Both electrode types show a low overpotential for the desired reactions and hardly degrade over time.

The invention will be further explained with reference to the accompanying drawings, showing exemplary embodiments.
- Figure 1:: shows schematically in cross section an electrolytic cell;
- Figure 2:: shows a section of a membrane of the embodiment of Figure 1;
- Figure 3:: shows an alternative embodiment of an electrolytic cell.

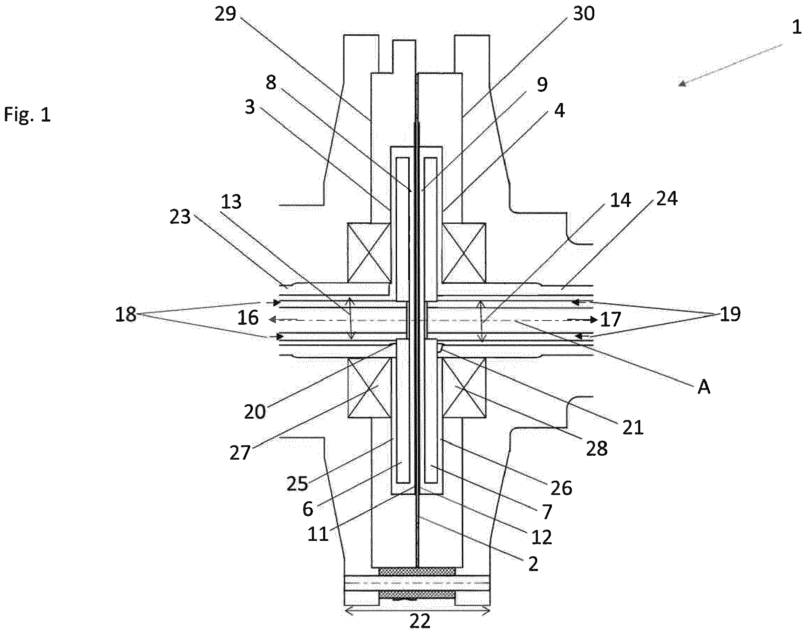

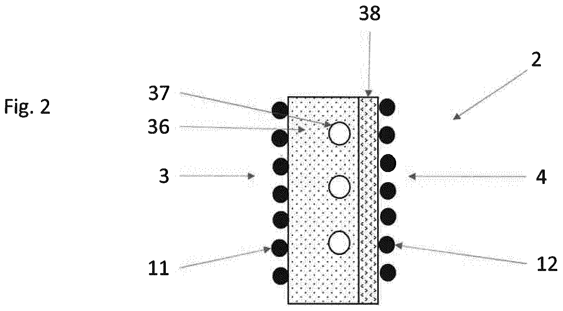

Figure 1 shows an electrolytic cell 1 comprising a central disc-shaped ion-exchange membrane disc 2 with an anode side 3 and a cathode side 4. The membrane disc 2 is positioned centrally between a first stator disc 6 at the anode side 3, and a second stator disc 7 at the cathode side 4. The stator discs 6, 7 are spaced from the membrane disc 2 to form electrolyte gaps 8, 9, including an anolyte gap 8 at the anode side 3 of the membrane disc 2, and a catholyte gap 9 at the cathode side 4. The membrane disc 2 and the stator discs have a circular outline and are arranged coaxially about a central axis A. As shown in Figure 2, the membrane 2 comprises an anode mesh 11 at the anode side 3 and a cathode mesh 12 at the cathode side 4, as explained in more detail hereinafter.

The electrolyte gaps 8, 9 can be of equal width or different widths if so desired. The gaps 8, 9 can be of constant width, or the discs 6, 7 and/or the membrane 2 can be profiled to provide an electrolyte gap 8, 9 of varying width in order to optimize mixing and mass flow. The gap width may for example be 50 mm or less, e.g., 5 mm or less, for example at least 0.1 mm, but larger or smaller gap widths can also be used if so desired.

Good shear is particularly obtained if the gap width is less than 5 mm, e.g., less than 2 mm, e.g., about 1 mm or less, but other gap dimensions can also be used if so desired. To further increase shear the surface of the stator discs 6, 7 may be roughened, e.g., textured or profiled.

Both stator discs 6, 7 have one side facing the membrane disc 2 and an opposite side facing an inner wall of a housing 22 of the electrolytic cell 1. Both discs 6, 7 are supported by coaxially arranged shafts 13, 14. Both shafts 13, 14 comprise a central electrolyte channel 16, 17 aligned about the central axis A and extending between an outer end of the shaft 13, 14 and the respective electrolyte gap 8, 9. Both shafts 13, 14 also comprise annular outer channels 18, 19 allowing electrolyte flow via perforations 20, 21 at the point where the shafts 13, 14 connect to the discs 6, 7 at the side facing the housing 22.

The housing 22 encases the membrane disc 2 and the stator discs 6, 7. The housing 22 has two cylindrical ports 23, 24 forming passages for the respective shafts 13, 14. The housing 22 follows the contour of the discs 6, 7 and the shafts 13, 14 in such way that a housing gap 25, 26 remains between the inner wall housing and the discs 6, 7. Like the electrolyte gaps 8, 9, the housing gap 25, 26 can have a constant thickness or the thickness of the housing gap 25, 26 can be inversely proportional relative to the distance to the central axis A, so as to obtain a constant cross sectional flow-through area and a constant flow.

At the outer ends, the cylindrical shafts 13, 14 are supported by sealed bearings 27, 28 configured for sealing the housing gap 25, 26 in a leaktight manner.

The housing 22 is symmetrical having a anode half 29 and a cathode half 30. In the shown embodiment the two halves 29, 30 are electrically conductive. The anode half 29 is electrically connected to an external power source, e.g. by means of a sliding contact (not shown), and is physically connected to the anode mesh 11. The cathode half 30 is electrically connected to the cathode mesh 12. The two halves 29, 30 of the housing 22 are isolated from each other by the outer circumference of the membrane disc 2. A potential difference over the membrane disc 2 is applied by connecting the anode half 29 to a positive pole of a battery or similar electrical source (not shown), whereas the cathode half 30 of the housing 22 is connected to a negative pole of the electrical source.

The housing 22 is operatively connected to a drive, such as an electric motor (not shown) to rotate the housing 22 relative to the stator discs 6, 7 about the axis of rotation A.

In the shown embodiment, the stator discs 6, 7 and the membrane disc 2 are vertically arranged, while the rotational axis A is horizontal. In an alternative arrangement the discs 2, 6, 7 can be horizontal or take any other suitable position.

In use, a potential difference is applied over the membrane disc 2, while the housing 22 is rotated with the membrane disc 2 and electrolyte is fed to electrolyte gaps 8, 9 via the outer channels 18, 19 and the respective housing gaps 25, 26. For example, an aqueous sodium chloride solution (e.g., about 200 g/l) is fed to the anolyte gap 8, while a 32 wt.% aqueous solution of sodium hydroxide is used as a catholyte. Chlorine gas is generated at the anode mesh 11, while hydrogen gas is generated at the cathode mesh 12.

The main flow of electrolyte is from the outer channel 18, 19 to the central discharge channel 16, 17 of the hollow shaft 13, 14. This results in a centripetal flow over the electrolyte gaps 8, 9. Rotation of the housing 22 and the membrane disc 2 results in a centrifugal force. The liquid content has more mass inertia, and is therefore more impacted by the centrifugal force than the gas content of the electrolyte. This enforces the centripetal flow of the gas content, which results in a very effective discharge of the generated gases.

Figure 2 shows in more detail a section of the ion-exchange membrane disc 2 typically suitable for chlor alkali electrolysis. The membrane 2 comprises a main layer 36 with reinforcements 37 and a second layer 38 covering the main layer 36 at the cathode side 4. The main layer 36 can for example be a sulfonate layer. The second layer 38 can for instance be a carboxylate layer. The reinforcement 37 may for instance be a non-conductive polytetrafluoroethylene (PTFE) fabric. Suitable examples of commercially available membranes include the Nafion® 900 series membrane, available from Sigma Aldrich, the Aciplex® F6801 membrane, available from Asahi Kasei or the Flemion® F8080 membrane, available from Asahi Glass. An anode mesh 11 is attached to, or pressed against, the anode side 3 of the membrane disc 2, whereas a cathode mesh 12 is attached to, or pressed against, the cathode side 4 of the membrane disc 2.

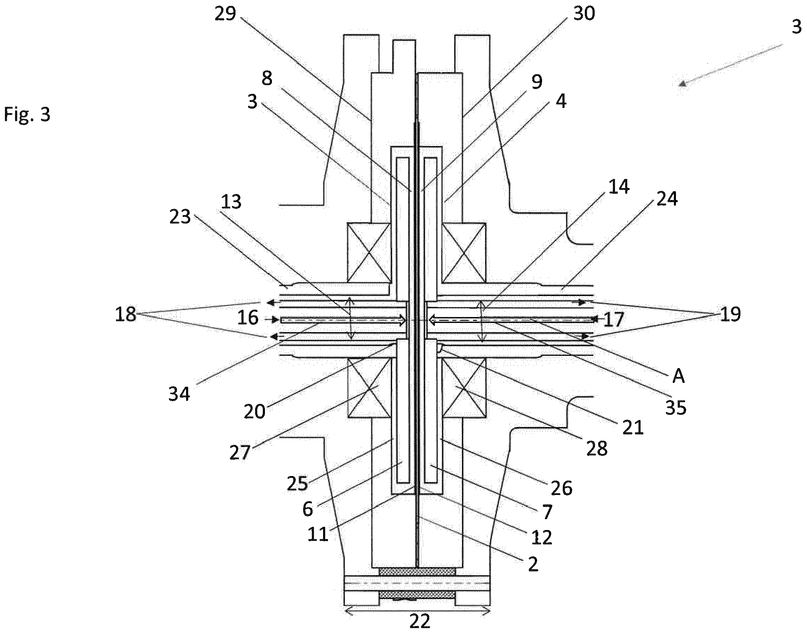

Figure 3 shows an alternative to the embodiment of the electrochemical cell 1, having a similar configuration as the cell 1 in Figure 1, but with the electrolyte flowing in opposite flow direction. In this embodiment the central electrolyte channels 16, 17 are used as inlet channels for electrolyte. Used electrolyte is discharged via the outer channels 18, 19 through perforations 20, 21. Fresh electrolyte is deposited centrally on the rotating separator disc 2 by means of nozzle type outlets 34, 35 and is jetted over the surface of the separator disc 2 and spread by centrifugal forces. With such a configuration a thin film is created over the surface of the separator disc 2. At first, the film tangentially accelerates due to formation of shear stresses at the disc-to-liquid interface. When reaching the local angular velocity the liquid moves outward forming a film with a typical thickness of 50 microns for liquids showing a rheological behavior comparable to water. The very thin film provides a very high mass, heat and momentum transfer between the gas and liquid and also between the mesh electrode surface and the electrolyte.

## Claims

1. Electrochemical cell (1) comprising:
- an anolyte space with an anode (11);
- a catholyte space with a cathode (12); and
- a separator disc (2) separating the anolyte space from the catholyte space;
wherein the anolyte space and/or the catholyte space comprise at least one wall (2) which is rotatable about an axis of rotation crossing the separator disc,
wherein the electrochemical cell comprises at least one stator (6, 7) in the anolyte space and/or the catholyte space.

2. Electrochemical cell according to claim 1, comprising a first disc (6) in the anolyte space, the disc being spaced from the separator disc (2) to define an anolyte gap (8) comprising the anode (11), the anolyte gap being operatively connected to an anolyte inlet (28) and an anolyte outlet (16).

3. Electrochemical cell according to claim 1 or 2, comprising a second disc (7) in the catholyte space, the second disc being spaced from the cathode side of the membrane to define a catholyte gap (9) comprising the cathode (12) and being operatively connected to a catholyte inlet (18) and a catholyte outlet (17).

4. Electrochemical cell according to claims 2 or 3,
wherein the stator comprises the first and/or second discs (6, 7).

5. Electrochemical cell according to claim 3 or 4, wherein the separator disc (2) connects to a housing (22) encasing the first and/or second discs (6, 7).

6. Electrochemical cell according to claim 5, wherein the first and/or the second disc (6, 7) comprise a first face facing the membrane disc (2) and an opposite face provided with a central hollow shaft (13, 14) defining a central electrolyte channel (16, 17).

7. Electrochemical cell according to claim 6, the housing (22) comprising passages or ports (23, 24) for the hollow shafts (13, 14).

8. Electrochemical cell according to claims 6 or 7, wherein the hollow shafts (13, 14) comprise annular electrolyte channels (18, 19) coaxially arranged around the respective central electrolyte channels (16, 17).

9. Electrochemical cell according to claim 8, wherein the central electrolyte channel (16, 17) through the hollow shaft (13, 14) is an inlet channel connected to an electrolyte supply, while the outer electrolyte channels (18, 19) are discharge channels connecting to a discharge line.

10. Electrochemical cell according to claim 8, wherein the outer channel (18, 19) is an inlet channel connected to an electrolyte supply, while the central electrolyte channel (16, 17) through the shaft is a discharge channel connecting to a discharge line.

11. Electrochemical cell according to any preceding claim, wherein the anode is an anode mesh (11) attached to the anode side (3) of the separator disc (2), and the cathode is a cathode mesh (12) attached to the cathode side (4) of the separator disc (2).

## Patentansprüche

1. Elektrochemische Zelle (1), umfassend:
- einen Anolyt-Raum mit einer Anode (11);
- einen Katolyt-Raum mit einer Kathode (12); und
- eine Separatorscheibe (2), die den Anolyt-Raum von dem Katolyt-Raum trennt;
wobei der Anolyt-Raum und/oder der Katholyt-Raum wenigstens eine Wand (2) umfasst, die um eine Drehachse, welche die Separatorscheibe kreuzt, drehbar ist,
wobei die elektrochemische Zelle wenigstens einen Stator (6, 7) in dem Anolyt-Raum und/oder in dem Katholyt-Raum umfasst.

2. Elektrochemische Zelle nach Anspruch 1, umfassend eine erste Scheibe (6) in dem Anolyt-Raum, wobei die Scheibe zu der Separatorscheibe (2) beabstandet ist, um einen Anolyt-Spalt (8), umfassend die Anode (11), zu definieren, wobei der Anolyt-Spalt mit einem Anolyt-Einlass (28) und einem Anolyt-Auslass (16) in Wirkverbindung steht.

3. Elektrochemische Zelle nach Anspruch 1 oder 2, umfassend eine zweite Scheibe (7) in dem Katholyt-Raum, wobei die zweite Scheibe zu der Kathodenseite der Membran beabstandet ist, um einen Katholyt-Spalt (9), umfassend die Kathode (12), zu definieren, und um in Wirkverbindung mit einem Katholyt-Einlass (18) und einem Katholyt-Auslass (17) zu stehen.

4. Elektrochemische Zelle nach Anspruch 2 oder 3,
wobei der Stator die erste und/oder zweite Scheibe (6, 7) umfasst.

5. Elektrochemische Zelle nach Anspruch 3 oder 4, wobei die Separatorscheibe (2) an ein Gehäuse (22) angeschlossen ist, das die erste und/oder zweite Scheibe (6, 7) umschließt.

6. Elektrochemische Zelle nach Anspruch 5, wobei die erste und/oder zweite Scheibe (6, 7) eine erste Fläche umfasst, die der Membranscheibe (2) zugewandt ist, und eine gegenüberliegende Fläche, die mit einer zentralen Hohlwelle (13, 14) versehen ist, die einen zentralen Elektrolytkanal (16, 17) definiert.

7. Elektrochemische Zelle nach Anspruch 6, wobei das Gehäuse (22) Durchgänge oder Anschlüsse (23, 24) für die Hohlwellen (13, 14) umfasst.

8. Elektrochemische Zelle nach Anspruch 6 oder 7, wobei die Hohlwellen (13, 14) ringförmige Elektrolytkanäle (18, 19) umfassen, die koaxial um die jeweiligen zentralen Elektrolytkanäle (16, 17) herum angeordnet sind.

9. Elektrochemische Zelle nach Anspruch 8, wobei der zentrale Elektrolytkanal (16, 17) durch die Hohlwelle (13, 14) ein Einlasskanal ist, der mit einer Elektrolytversorgung verbunden ist, während die äußeren Elektrolytkanäle (18, 19) Abflusskanäle sind, die mit einer Abführleitung verbunden sind.

10. Elektrochemische Zelle nach Anspruch 8, wobei der äußere Kanal (18, 19) ein Einlasskanal ist, der mit einer Elektrolytversorgung verbunden ist, während der zentrale Elektrolytkanal (16, 17) durch die Welle ein Abflusskanal ist, der mit einer Abführleitung verbunden ist.

11. Elektrochemische Zelle nach einem der vorhergehenden Ansprüche, wobei die Anode ein Anodengitter (11) ist, das mit der Anodenseite (3) der Separatorscheibe (2) verbunden ist, und die Kathode ein Kathodengitter (12) ist, das mit der Kathodenseite (4) der Separatorscheibe (2) verbunden ist.

## Revendications

1. Cellule électrochimique (1) comprenant :
- un espace d'anolyte ayant une anode (11) ;
- un espace de catholyte ayant une cathode (12) ; et
- un disque séparateur (2) séparant l'espace d'anolyte de l'espace de catholyte ;
dans laquelle l'espace d'anolyte et/ou l'espace de catholyte comprend/comprennent au moins une paroi (2) qui peut tourner autour d'un axe de rotation croisant le disque séparateur,
dans laquelle la cellule électrochimique comprend au moins un stator (6, 7) dans l'espace d'anolyte et/ou l'espace de catholyte.

2. Cellule électrochimique selon la revendication 1, comprenant un premier disque (6) dans l'espace d'anolyte, le disque étant espacé du disque séparateur (2) pour définir un intervalle d'anolyte (8) comprenant l'anode (11), l'intervalle d'anolyte étant relié de manière fonctionnelle à une entrée d'anolyte (28) et à une sortie d'anolyte (16).

3. Cellule électrochimique selon la revendication 1 ou 2, comprenant un deuxième disque (7) dans l'espace de catholyte, le deuxième disque étant espacé du côté cathode de la membrane pour définir un intervalle de catholyte (9) comprenant la cathode (12) et étant relié de manière fonctionnelle à une entrée de catholyte (18) et à une sortie de catholyte (17).

4. Cellule électrochimique selon la revendication 2 ou 3,
dans laquelle le stator comprend le premier et/ou le deuxième disque (6, 7).

5. Cellule électrochimique selon la revendication 3 ou 4, dans laquelle le disque séparateur (2) est relié à un boîtier (22) renfermant le premier et/ou le deuxième disque (6,7).

6. Cellule électrochimique selon la revendication 5, dans laquelle le premier et/ou le deuxième disque (6,7) comprend/comprennent une première face tournée vers le disque formant membrane (2) et une face opposée munie d'un arbre creux central (13,14) définissant un canal d'électrolyte central (16, 17).

7. Cellule électrochimique selon la revendication 6, le boîtier (22) comprenant des passages ou des orifices (23,24) pour les arbres creux (13, 14).

8. Cellule électrochimique selon la revendication 6 ou 7, dans laquelle les arbres creux (13,14) comprennent des canaux d'électrolyte annulaires (18,19) agencés de manière coaxiale autour des canaux d'électrolyte centraux respectifs (16, 17).

9. Cellule électrochimique selon la revendication 8, dans laquelle le canal d'électrolyte central (16,17) à travers l'arbre creux (13,14) est un canal d'entrée relié à une alimentation en électrolyte, tandis que les canaux d'électrolyte externes (18,19) sont des canaux d'évacuation reliés à une conduite d'évacuation.

10. Cellule électrochimique selon la revendication 8, dans laquelle le canal externe (18,19) est un canal d'entrée relié à une alimentation en électrolyte, tandis que le canal d'électrolyte central (16,17) à travers l'arbre est un canal d'évacuation relié à une conduite d'évacuation.

11. Cellule électrochimique selon l'une des revendications précédentes, dans laquelle l'anode est un treillis d'anode (11) fixé au côté anode (3) du disque séparateur (2), et la cathode est un treillis de cathode (12) fixé au côté cathode (4) du disque séparateur (2).
